# EUROPÄISCHE PATENTSCHRIFT

(11) **EP 2 424 083 B1**
(45) Veröffentlichungstag und Bekanntmachung des Hinweises auf die Patenterteilung: **26.06.2019**
(21) Anmeldenummer: 11165033.9
(22) Anmeldetag: 06.05.2011
(51) Int. Cl.: H02K 11/22

(54) **Elektromotor und Verfahren zu dessen Herstellung**
Electric motor and method for its production
Moteur électrique et son procédé de fabrication

(30) Priorität: 26.08.2010 DE 102010035773
(43) Veröffentlichungstag der Anmeldung: 29.02.2012
(73) Patentinhaber: Dunkermotoren GmbH, 79848 Bonndorf/Schwarzwald (DE)
(72) Erfinder: Kaiser, Bernhard, 79848 Bonndorf (DE)
(74) Vertreter: DREISS Patentanwälte PartG mbB

(56) Entgegenhaltungen:
- DE-A1- 10 109 186
- JP-A- 2007 097 240
- US-A- 5 155 401

## Beschreibung

Die Erfindung betrifft einen Elektromotor insbesondere für eine Werkzeugmaschine oder dergleichen. Die Erfindung betrifft ebenfalls ein Verfahren zur Herstellung dieses Elektromotors.

Ein derartiger Elektromotor ist allgemein bekannt und weist üblicherweise zumindest einen Stator und eine Welle mit einem Rotor auf. Beispielsweise bei einer Werkzeugmaschine kann ein derartiger Elektromotor zum Antrieb eines Bearbeitungstisches verwendet werden. Zur Ermittlung der Drehstellung und/oder der Drehzahl der Welle ist häufig eine Encoderscheibe vorgesehen, die beispielsweise auf der Welle angeordnet ist. Damit eine hohe Genauigkeit bei der Ermittlung insbesondere der Drehstellung der Welle möglich ist, ist es erforderlich, die Encoderscheibe mit einer hohen Genauigkeit auf der Welle zu fixieren. Dies erfordert einen hohen Aufwand bei der Montage der Encoderscheibe.

Beispiele solcher Lösungen zur Befestigung der Encoderscheibe auf der Welle sind aus JP 2007-097240 A, DE 10109186 A1 und US 5155401 A bekannt.

Aufgabe der Erfindung ist es, einen Elektromotor zu schaffen, der einfach montiert werden kann, und dessen Drehstellung mit einer hohen Genauigkeit ermittelbar ist.

Diese Aufgabe wird durch einen Elektromotor nach dem Anspruch 1 gelöst. Die Aufgabe wird ebenfalls durch ein Verfahren zur Herstellung dieses Elektromotors nach dem Anspruch 7 gelöst.

Bei dem erfindungsgemäßen Elektromotor ist eine erste Buchse vorgesehen, die mit einer Encoderscheibe verbunden ist. Die erste Buchse ist mit einem Schiebesitz auf der Welle angeordnet. Die erste Buchse liegt in axialer Richtung an einem Anschlag an. Weiterhin ist eine zweite Buchse vorgesehen, die benachbart und mit Abstand zu der ersten Buchse auf der Welle angeordnet ist. Die zweite Buchse ist mit einem Festsitz auf der Welle angeordnet. Zwischen der ersten Buchse und der zweiten Buchse ist eine Druckfeder derart angeordnet, dass die erste Buchse gegen den Anschlag gedrückt wird.

Der Vorteil der Erfindung besteht darin, dass die erste Buchse zusammen mit der Encoderscheibe von der Druckfeder immer gegen den Anschlag gedrückt wird. Damit ist die axiale Stellung der Encoderscheibe auf der Welle immer durch den Anschlag festgelegt. Auch bei einer Längsbewegung der Welle beispielsweise aufgrund eines geringfügigen Spiels und/oder einer temperaturbedingten geringfügigen Längenausdehnung wird diese axiale Stellung der Encoderscheibe nicht verändert. Damit wird eine hohe Genauigkeit bei der Ermittlung der Drehstellung des Elektromotors erreicht. Ist der Elektromotor beispielsweise zum Antrieb eines Bearbeitungstisches einer Werkzeugmaschine vorgesehen, so kann über die genaue Ermittlung der Drehstellung des Elektromotors auch eine genaue Ermittlung der Position des Bearbeitungstisches erreicht werden.

Bei einer Weiterbildung der Erfindung sind die erste Buchse und die zweite Buchse jeweils mit abstehenden Fingern versehen, die in entgegengesetzte Richtungen ausgerichtet sind, und die derart ausgebildet sind, dass sie im Wesentlichen spielfrei ineinander eingreifen können. Dies bringt den Vorteil mit sich, dass die Stellung der Encoderscheibe in Drehrichtung durch die ineinandergreifenden Finger und die festsitzende zweite Buchse festgelegt ist. Damit hat eine Längsbewegung der Welle keinen Einfluss auf die Drehstellung der Encoderscheibe.

Bei dem erfindungsgemäßen Verfahren zur Herstellung des Elektromotors wird die zweite Buchse mit einem Festsitz auf der Welle angeordnet, die erste Buchse wird mit einem Schiebesitz auf der Welle angeordnet, und die Druckfeder wird zwischen der ersten Buchse und der zweiten Buchse angeordnet. Zweckmäßigerweise wird die Welle mit einem Schiebesitz in ein Lager eingesteckt. Dieses Montageverfahren ist einfach und mit wenig Aufwand verbunden und damit kostengünstig.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

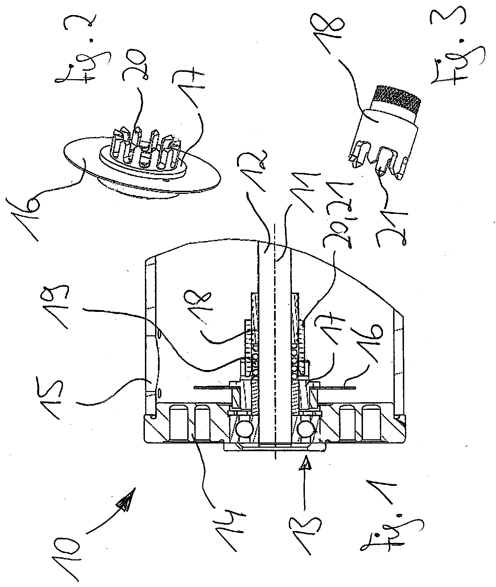

Figur 1 der Zeichnung zeigt einen schematischen Längsschnitt durch einen Teil eines Ausführungsbeispiels eines erfindungsgemäßen Elektromotors, Figur 2 zeigt eine perspektivische Ansicht einer Encoderscheibe des Elektromotors der Figur 1, und Figur 3 zeigt eine perspektivische Ansicht einer Buchse des Elektromotors der Figur 1.

In der Figur 1 ist ein Elektromotor 10 dargestellt, der vorzugsweise bei einer Werkzeugmaschine oder dergleichen zum Einsatz kommt. Der Elektromotor kann aber auch bei einem elektrischen Türantrieb oder einer elektrisch betriebenen Jalousie oder Markise oder dergleichen verwendet werden. Der Elektromotor 10 weist eine Längsachse 11 auf und ist im Wesentlichen symmetrisch zu dieser Längsachse 11 ausgebildet.

Etwa koaxial zur Längsachse 11 ist eine Welle 12 angeordnet, die in nicht-dargestellter Weise einen Rotor trägt. Die Welle 12 ist in einem Lager 13, vorzugsweise in einem Kugellager, drehbar gelagert. Der Innenring des Lagers 13 ist mit einem Schiebesitz auf der Welle 12 montiert. Der Außenring des Lagers 13 ist fest in einem Lagerschild 14 gehalten. Das Lagerschild 14 ist etwa quer zur Längsachse 11 ausgerichtet und mit einem Gehäuse 15 verbunden. Das Gehäuse 15 ist rohrförmig ausgebildet und etwa koaxial zu Längsachse 11 ausgerichtet. In dem Gehäuse 15 ist in nicht-dargestellter Weise ein dem Rotor zugeordneter Stator untergebracht.

Auf der Welle 12 ist eine Encoderscheibe 16 angeordnet. Die Encoderscheibe 16 ist drehfest auf einer ersten Buchse 17 gehalten. Die Encoderscheibe 16 ist etwa quer zur Längsachse 11 ausgerichtet. Die erste Buchse 17 ist mit einem Schiebesitz auf der Welle 12 montiert. Die erste Buchse 17 mit der daran gehaltenen Encoderscheibe 16 ist benachbart zu dem Innenring des Lagers 13 auf der Welle 12 angeordnet. Der Innenring des Lagers 13 bildet einen Anschlag für die erste Buchse 17.

Es versteht sich, dass die Encoderscheibe 16 und die erste Buchse 17 auch einteilig ausgebildet sein können. Weiter versteht es sich, dass auch andere Bauteile vorgesehen sein können, die anstelle oder ergänzend zu dem Innenring des Lagers 13 einen Anschlag für die erste Buchse 17 darstellen.

Die Encoderscheibe 16 ist in nicht-dargestellter Weise mit Merkmalen versehen, mit deren Hilfe die Position und/oder die Drehzahl der Encoderscheibe 16 ermittelbar ist. Diese Merkmale können dann beispielsweise von einer der Encoderscheibe 16 zugeordneten Elektronik abgetastet werden. Diese Elektronik kann insbesondere auf der der Encoderscheibe 16 zugewandten Seite des Lagerschilds 14 angeordnet sein.

Auf der Welle 12 ist eine zweite Buchse 18 mit einem Festsitz montiert. Die zweite Buchse 18 ist somit auf der Welle 12 weder in axialer Richtung verschiebbar, noch in Drehrichtung drehbar. Die zweite Buchse 18 ist benachbart zu der ersten Buchse 17 auf der Welle 12 angeordnet. Zwischen den beiden Buchsen 17, 18 ist zumindest ein geringer Abstand in Richtung der Längsachse 11 vorhanden. Zwischen den beiden Buchsen 17, 18 ist eine Druckfeder 19 vorhanden. Hierzu sind entsprechende Aussparungen in den beiden Buchsen 17, 18 vorhanden. Die Anordnung der beiden Buchsen 17, 18 sowie die Ausbildung der Druckfeder 19 ist derart vorgesehen, dass die erste Buchse 17 mit der daran gehaltenen Encoderscheibe 16 immer von der Druckfeder 19 gegen den Innenring des Lagers 13 gedrückt wird und die Druckfeder 19 sich dabei an der feststehenden zweiten Buchse 18 abstützt.

Die erste Buchse 17 und die zweite Buchse 18 sind jeweils mit abstehenden Fingern 20, 21 versehen, die in einer gedachten koaxialen zylindrischen Fläche jeweils mit Abstand zueinander angeordnet sind. Die Finger 20, 21 sind in einander entgegengesetzte Richtungen ausgerichtet und derart ausgebildet, dass sie im Wesentlichen spielfrei ineinander eingreifen können. Insoweit ist die Form der Finger 20, 21 der jeweils einen Buchse 17, 18 jeweils an die Form der Zwischenräume zwischen den Fingern 21, 20 der jeweils anderen Buchse 18, 17 angepasst. Die Finger 20, 21 sind an ihren freien Enden spitz zulaufend ausgebildet, so dass sie bei der Montage automatisch die richtige Winkelstellung zueinander finden. Es versteht sich, dass die Finger 20, 21 durch andersartig ausgebildete Mitnehmer realisiert sein können.

Die Encoderscheibe 16 mit der ersten Buchse und den dortigen Fingern 20 ist in der Figur 2 und die zweite Buchse 18 mit den dortigen Fingern 21 ist in der Figur 3 im Detail dargestellt. Aus diesen beiden Figuren kann das Ineinandergreifen der Finger 20, 21 abgeleitet werden.

Bei der Montage des Elektromotors 10 wird die zweite Buchse 18 an einer vorab festgelegten Position in axialer Richtung auf der Welle 12 angeordnet und dort als Festsitz aufgebracht. Beispielsweise kann die zweite Buchse 18 auf die Welle 12 aufgepresst werden. Dann wird die erste Buchse 17 zusammen mit der daran gehaltenen Encoderscheibe 16 auf die Welle 12 aufgeschoben. Es versteht sich, dass die beiden vorgenannten Montageschritte auch in umgekehrter Reihenfolge ausgeführt werden können.

Zwischen die erste Buchse 17 und die zweite Buchse 18 wird die Druckfeder 19 eingebracht. Die Welle 12 wird dann zusammen mit der Encoderscheibe 16 und der zweiten Buchse 18 in den Innenring des Lagers 13 eingeschoben. Es versteht sich, dass das Einschieben der Welle 12 in das Lager 13 auch zu einem früheren oder einem späteren Zeitpunkt erfolgen kann.

Im Laufe der weiteren Montage wird die Welle 12 in nicht-dargestellter Weise an dem dem Lagerschild 14 gegenüberliegenden Ende der Welle 12 gelagert. Dabei wird die zweite Buchse 18 entlang der Längsachse 11 gegen die Kraft der Druckfeder 19 in Richtung zu der ersten Buchse 17 gedrückt. Dies hat zur Folge, dass die erste Buchse 17 zusammen mit der Encoderscheibe 16 - wie bereits erläutert wurde - gegen den Innenring des Lagers 13 gedrückt wird. Es wird darauf hingewiesen, dass das Andrücken der zweiten Buchse 18 in Richtung zu der ersten Buchse 17 auch auf andere Weise erreicht werden kann, beispielsweise durch eine entsprechende axiale Fixierung der Welle 12 oder dergleichen.

Tritt im Betrieb des Elektromotors 10 beispielsweise aufgrund eines geringfügigen Spiels der Welle 12 und/oder aufgrund von temperaturabhängigen geringfügigen Längenänderungen der Welle 12 eine Bewegung der Welle 12 in Richtung der Längsachse 11 auf, so hat diese Bewegung keinen Einfluss auf die Stellung der ersten Buchse 17 und damit der Encoderscheibe 16 in Richtung der Längsachse 11. Eine derartige axiale Bewegung der Welle 12 wird mit Hilfe des Abstands zwischen den beiden Buchsen 17, 18 und mittels der Druckfeder 19 kompensiert. Unabhängig von einer Bewegung der Welle 12 in Richtung der Längsachse 11 wird die erste Buchse 17 zusammen mit der Encoderscheibe 16 immer gegen den als Anschlag wirkenden Innenring des Lagers 13 gedrückt. Die axiale Stellung der Encoderscheibe 16 ist somit im Hinblick auf das Lagerschild 14 und damit auch im Hinblick auf das Gehäuse 15 des Elektromotors 10 genau definiert und unabhängig von möglichen axialen Bewegungen der Welle 12. Wie bereits erwähnt, können auch andere Bauteile des Elektromotors 10 einen Anschlag für die erste Buchse 17 bilden, so dass dann in diesem Fall diese anderen Bauteile die axiale Stellung der Encoderscheibe 16 festlegen.

Ist, wie erwähnt wurde, die der Encoderscheibe 16 zugeordnete Elektronik an dem Lagerschild 14 angebracht, so wird durch das Andrücken der ersten Buchse 17 gegen den Innenring des Lagers 13 erreicht, dass die Stellung der Encoderscheibe 16 im Hinblick auf die Elektronik in axialer Richtung immer gleich bleibt. Wird mit Hilfe der Encoderscheibe 16 und der zugehörigen Elektronik beispielsweise die Drehstellung der Welle 12 und damit letztlich die Drehstellung des Elektromotors 10 ermittelt, so wird durch diese gleichbleibende Stellung eine hohe Genauigkeit der ermittelten Drehstellung gewährleistet.

Die Stellung der Encoderscheibe 16 in Drehrichtung der Welle 12 wird durch die spielfrei ineinander greifenden Finger 20, 21 und die festsitzende zweite Buchse 18 erreicht und ist ebenfalls unabhängig von Bewegungen der Welle 12 in Richtung der Längsachse 11. Eine derartige axiale Bewegung der Welle 12 wird - wie erläutert - mit Hilfe der Druckfeder 19 kompensiert, ohne dass dies einen Einfluss auf die ineinander greifenden Finger 20, 21 und damit die Stellung der Encoderscheibe 16 in Drehrichtung hat.

Wie erläutert wurde, wird die erste Buchse 17 mit Hilfe der Druckfeder 19 gegen den Innenring des Lagers 13 gedrückt. Auf diese Weise wird eine sogenannte axiale Anstellung des Lagers 13 erreicht. Damit wird die Geräuschentwicklung des Lagers 13 vermindert und dessen Lebensdauer erhöht

## Patentansprüche

1. Elektromotor (10) insbesondere für eine Werkzeugmaschine oder dergleichen, mit einer Welle (12), auf der eine Encoderscheibe (15) angeordnet ist, wobei eine erste Buchse (17) vorgesehen ist, die mit der Encoderscheibe (15) verbunden ist, **dadurch gekennzeichnet, dass** die erste Buchse (17) mit einem Schiebesitz auf der Welle (12) angeordnet ist, dass die erste Buchse (17) in axialer Richtung an einem Anschlag anliegt, dass eine zweite Buchse (18) vorgesehen ist, die benachbart und mit Abstand zu der ersten Buchse (17) auf der Welle (12) angeordnet ist, dass die zweite Buchse (18) mit einem Festsitz auf der Welle (12) angeordnet ist, und dass zwischen der ersten Buchse (17) und der zweiten Buchse (18) eine Druckfeder (19) derart angeordnet ist, dass die erste Buchse (17) gegen den Anschlag gedrückt wird.

2. Elektromotor (10) nach Anspruch 1, wobei ein Lager (13) vorgesehen ist, wobei die Welle (12) mit einem Schiebesitz in den Innenring des Lagers (13) eingesteckt ist, und wobei das Lager (13), insbesondere dessen Innenring, den Anschlag für die erste Buchse (17) bildet.

3. Elektromotor (10) nach Anspruch 2, wobei der Außenring des Lagers (13) mit einem Gehäuse (15) verbunden ist, insbesondere mit einem in dem Gehäuse (15) gehaltenen Lagerschild (14).

4. Elektromotor (10) nach einem der vorstehenden Ansprüche, wobei die axiale Stellung der Encoderscheibe (16) auf der Welle (12) durch den Anschlag festgelegt ist.

5. Elektromotor (10) nach einem der vorstehenden Ansprüche, wobei die erste Buchse (17) und die zweite Buchse (18) jeweils mit abstehenden Fingern (20,21) versehen sind, die in entgegengesetzte Richtungen ausgerichtet sind, und die derart ausgebildet sind, dass sie im Wesentlichen spielfrei ineinander eingreifen können.

6. Elektromotor (10) nach Anspruch 5, wobei die Stellung der Encoderscheibe (16) in Drehrichtung durch die ineinandergreifenden Finger (20, 21) und die festsitzende zweite Buchse (18) festgelegt ist.

7. Verfahren zur Herstellung eines Elektromotors (10) nach einem der vorstehenden Ansprüche, **dadurch gekennzeichnet, dass** die zweite Buchse (18) mit einem Festsitz auf der Welle (12) angeordnet wird, dass die erste Buchse (17) mit einem Schiebesitz auf der Welle (12) angeordnet wird, und dass die Druckfeder (19) zwischen der ersten Buchse (17) und der zweiten Buchse (18) angeordnet wird.

8. Verfahren nach Anspruch 7, wobei die Welle (12) mit einem Schiebesitz in ein Lager (13) eingesteckt wird.

## Claims

1. An electric motor (10), in particular for a machine tool or the like, comprising a shaft (12) on which an encoder disc (15) is arranged, wherein a first bushing (17) is provided which is coupled to the encoder disc (15), **characterized in that** the first bushing (17) is arranged on the shaft (12) with sliding fit, the first bushing (17) abuts on a stop in an axial direction, a second bushing (18) is provided which is arranged on the shaft (12) adjacent to and with a distance from the first bushing (17), the second bushing (18) is arranged on the shaft (12) with force fit, and a compression spring (19) is arranged between the first bushing (17) and the second bushing (18) such that the first bushing (17) is urged against the stop.

2. The electric motor (10) according to claim 1, wherein a bearing (13) is provided, wherein the shaft (12) is inserted into an inner ring of the bearing (13) with sliding fit, and wherein the bearing (13), in particular its inner ring, forms the stop for the first bushing (17) .

3. The electric motor (10) according to claim 2, wherein an outer ring of the bearing (13) is coupled to a housing (15), in particular to a bearing shield (14) held in the housing (15).

4. The electric motor (10) according to one of the preceding claims, wherein the axial position of the encoder disc (16) on the shaft (12) is determined by the stop.

5. The electric motor (10) according to one of the preceding claims, wherein the first bushing (17) and the second bushing (18) are each provided with protruding fingers (20, 21) oriented in opposite directions and formed such that they can engage one another substantially without backlash.

6. The electric motor (10) according to claim 5, wherein the position of the encoder disc (16) in the direction of rotation is determined by the engaging fingers (20, 21) and the fixed second bush (18).

7. A method for manufacturing an electric motor (10) according to one of the preceding claims, **characterized in that** the second bushing (18) is arranged on the shaft (12) with tight fit, **in that** the first bushing (17) is arranged on the shaft (12) with sliding fit, and **in that** the compression spring (19) is arranged between the first bushing (17) and the second bushing (18).

8. The method according to claim 7, wherein the shaft (12) is inserted into a bearing (13) with sliding fit.

## Revendications

1. Moteur électrique (10) en particulier pour une machine-outil ou similaire, comprenant un arbre (12) sur lequel est agencé un disque de codeur (15), dans lequel un premier coussinet (17) est prévu, qui est relié au disque de codeur (15), **caractérisé en ce que** le premier coussinet (17) est agencé sur l'arbre (12) avec un ajustement coulissant, **en ce que** le premier coussinet (17) s'applique contre une butée dans la direction axiale, **en ce qu'**un deuxième coussinet (18) est prévu, qui est agencé sur l'arbre (12) au voisinage et à distance du premier coussinet (17), **en ce que** le deuxième coussinet (18) est agencé sur l'arbre (12) avec un ajustement serré, et **en ce qu'**un ressort de compression (19) est agencé entre le premier coussinet (17) et le deuxième coussinet (18) de telle sorte que le premier coussinet (17) est pressé contre la butée.

2. Moteur électrique (10) selon la revendication 1, dans lequel un palier (13) est prévu, dans lequel l'arbre (12) est introduit avec un ajustement coulissant dans la bague intérieure du palier (13), et dans lequel le palier (13), en particulier sa bague intérieure, forme la butée pour le premier coussinet (17).

3. Moteur électrique (10) selon la revendication 2, dans lequel la bague extérieure du palier (13) est reliée à un carter (15), en particulier à un flasque (14) retenu dans le carter (15).

4. Moteur électrique (10) selon l'une quelconque des revendications précédentes, dans lequel la position axiale du disque de codeur (15) sur l'arbre (12) est bloquée par la butée.

5. Moteur électrique (10) selon l'une quelconque des revendications précédentes, dans lequel le premier coussinet (17) et le deuxième coussinet (18) sont pourvus chacun de doigts (20, 21) en saillie, qui sont orientés dans des directions opposées, et qui sont conçus de manière à pouvoir s'interpénétrer sensiblement sans jeu.

6. Moteur électrique (10) selon la revendication 5, dans lequel la position du disque de codeur (15) dans le sens de rotation est bloquée par les doigts (20, 21) s'interpénétrant et par le deuxième coussinet (18) à ajustement serré.

7. Procédé pour fabriquer un moteur électrique (10) selon l'une quelconque des revendications précédentes, **caractérisé en ce que** le deuxième coussinet (18) est agencé sur l'arbre (12) avec un ajustement serré, **en ce que** le premier coussinet (17) est agencé sur l'arbre (12) avec un ajustement coulissant, et **en ce que** le ressort de compression (19) est agencé entre le premier coussinet (17) et le deuxième coussinet (18).

8. Procédé selon la revendication 7, dans lequel l'arbre (12) est introduit dans un palier (13) avec un ajustement coulissant.
